# FASCICULE DE BREVET EUROPEEN

(11) **EP 2 590 541 B1**
(45) Date de publication et mention de la délivrance du brevet: **03.06.2020**
(21) Numéro de dépôt: 11743294.8
(22) Date de dépôt: 05.07.2011
(51) Int. Cl.: A47J 43/07, B26D 1/29, B26D 3/28, A47J 43/25

(54) **DISQUE DE COUPE POUR APPAREIL ELECTROMENAGER**
SCHNEIDSCHEIBE FÜR EIN ELEKTRISCHES HAUSHALTSGERÄT
CUTTING DISC FOR AN ELECTRICAL HOUSEHOLD APPLIANCE

(30) Priorité: 05.07.2010 FR 1055430
(43) Date de publication de la demande: 15.05.2013
(73) Titulaire: SEB S.A., 69130 Ecully (FR)
(72) Inventeur: SMIT, Robert, 65290 Louey (FR); NOGUEZ, Jean-Michel, 65100 Lourdes (FR); PEYRAS, Lionel, 65100 Lourdes (FR)
(74) Mandataire: Bourrières, Patrice
(86) Numéro de dépôt international: PCT/FR2011/051578
(87) Numéro de publication internationale: WO 2012/004511

(56) Documents cités:
- DE-A1- 1 529 248
- FR-A- 948 423
- FR-A6- 2 140 961
- JP-U- H0 392 443
- JP-U- S53 122 251
- US-A- 4 190 208

## Description

La présente invention concerne de manière générale un disque de coupe pour appareil électroménager de préparation d'aliments et plus particulièrement un disque de coupe comprenant une lame de coupe fixe et un insert amovible.

Il est connu dans l'art antérieur des dispositifs de coupe pour appareil électroménager. En particulier, le document JP4099550 décrit un disque de coupe rotatif comportant une lame de coupe et un outil mobile par rapport au disque de coupe. La lame de coupe tranche de matière systématique les aliments à préparer, et l'utilisateur, si il le désire, peut configurer l'outil mobile de manière à opérer un fendage supplémentaire des aliments ou non, pour obtenir des filets en julienne. A cet effet, l'outil mobile en rotation par rapport au disque peut être positionné de manière à présenter une face lisse de travail ou alternativement une face comportant des couteaux, de sorte que les aliments peuvent être soit émincés si c'est la face lisse de l'outil amovible qui est présentée, soit préparés en julienne, si c'est une face garnie de lames qui est sélectionnée. En contrepartie, ce système présente notamment l'inconvénient d'être complexe, car l'outil est mobile en rotation par rapport au disque. Il faut donc que le disque comporte deux axes de rotation pour le positionnement. Au vu des dimensions, ces axes sont de petite taille, et pour offrir la résistance souhaitée, la conception est complexe. De plus, il est nécessaire de bloquer la rotation de l'outil lorsque la mise en configuration est finie et cela nécessite un mécanisme, qui encore une fois est complexe. Par ailleurs, rien n'empêche l'utilisateur de faire tourner le disque avec l'outil mobile mal positionné (c'est-à-dire que l'outil est positionné entre deux positions d'utilisation par exemple), ce qui peut aboutir en conséquence à une détérioration du disque ou de l'outil car des efforts importants seront générés si l'outil va rencontrer un aliment résistant. Enfin, l'usage étant alimentaire, il faut prévoir le démontage de l'outil pour le nettoyage, ce qui complexifie encore plus le système de positionnement par les axes de rotation. On peut bien sûr mentionner que les coûts de production d'un tel disque seront élevés.

Le document US 4190208 décrit pour sa part un disque rotatif destiné à être utilisé avec un appareil de préparation culinaire et comportant une glissière pour permettre le positionnement sur le disque de divers outils de coupe. Ces outils amovibles, ou inserts, permettent alternativement de préparer les aliments en émincé ou en julienne. Il faut pour cela que l'utilisateur choisisse dans les accessoires de l'appareil l'insert adéquat et le positionne sur le disque. On notera que ce concept impose l'utilisation de plusieurs inserts séparés, car chaque insert possède une fonction de coupe spécifique. De ce fait, il faut prévoir un rangement spécifique de tous ces inserts, l'utilisateur peut les perdre et il est plus coûteux de fabriquer plusieurs inserts qu'un seul, car il y a plus de références à gérer en production et en logistique et car chaque insert ne propose qu'une fonction utile au client. Enfin, rien n'est prévu pour empêcher la rotation du disque si l'insert n'est pas positionné sur ce dernier. Il y aura alors ici aussi des efforts angulaires importants sur le disque lorsque le logement de l'insert, vide, viendra en regard des aliments à trancher.

Un appareil selon le préambule de la revendication 1 est connu du document JP H03 92443 U.

Un but de la présente invention est de répondre aux inconvénients des documents de l'art antérieur mentionnés ci-dessus et en particulier, de proposer un disque de coupe, comportant une lame de coupe fixe et un insert démontable, apte à réaliser des préparations culinaires différentes tout en permettant un nettoyage facile, rapide et en restant simple d'utilisation, avec une fabrication peu coûteuse.

Pour cela, un premier aspect de l'invention concerne un disque de coupe pour appareil électroménager de préparation d'aliments comportant une lame de coupe fixe et un insert démontable comportant des moyens de positionnement sur le disque de coupe permettant un démontage de l'insert depuis une première position, pour permettre un remontage dans une deuxième position, de sorte que l'insert est apte à présenter deux faces de travail différentes dans l'une ou l'autre des deux positions, du fait que le disque de coupe est entraîné en rotation par l'insert qui comporte un organe d'entraînement apte à coopérer avec un arbre de rotation relié à un organe moteur de l'appareil électroménager de préparation d'aliments, et que des moyens de guidage radial permettent un démontage de l'insert depuis la première position, pour permettre un remontage dans la deuxième position.

Ainsi, une telle réalisation permet, grâce au guidage radial, une construction simple de l'insert et du disque qui comporte par ailleurs déjà une lame de coupe, de sorte que le démontage et le montage sont pratiques et rapides. Cela facilite alors le nettoyage, qui de surcroit, grâce à la simplicité des surfaces de guidage est amélioré car il n'y a pas de petites pièces compliquées qui peuvent présenter des recoins dans lesquels la nourriture irait se loger. Ce mode de réalisation permet d'éviter tout endommagement du disque de coupe si l'insert est mal positionné ou absent car dans ces cas, l'arbre moteur de l'appareil ne pourra pas entraîner en rotation le disque, évitant ainsi des contraintes importantes imprévues sur le système. L'invention offre donc tous ces avantages tout en offrant deux possibilités de mise en configuration du disque de coupe pour permettre de préparer les aliments de deux manières différentes sans pour autant obliger l'utilisateur à changer le disque complet.

De manière avantageuse, la première face de travail de l'insert effectue une opération de coupe sur les aliments et la deuxième face de travail est lisse. Cette mise en œuvre est intéressante car elle permet soit d'émincer simplement les aliments grâce à la lame de coupe, soit d'effectuer une opération de coupe supplémentaire sur les aliments. On apporte une fonction supplémentaire au disque de coupe qui comporte une lame de coupe fixe, tout en ayant un insert démontable à deux faces qui reste simple et économique à fabriquer. En alternative, chacune des faces de travail de l'insert pourrait notamment effectuer une opération de coupe sur les aliments.

De manière avantageuse, les moyens de guidage forment une glissière radiale. Une glissière radiale est particulièrement bien adaptée à la problématique de réduire la complexité de l'assemblage car les formes à fabriquer sont simples et l'utilisation est robuste et aisée pour l'utilisateur.

De manière avantageuse, la lame de coupe sert à émincer les aliments, et la première face de l'insert comporte des couteaux pour effectuer, en complément avec la lame de coupe, une préparation en julienne des aliments. L'insert selon l'invention, en partant d'un disque de coupe avec lame de coupe classique éminçant les aliments, permet d'ajouter la possibilité pour l'utilisateur de préparer les aliments en julienne.

De manière avantageuse, l'insert, de forme allongée, possède un plan médian et les deux faces de travail sont agencées en opposition l'une de l'autre par rapport au plan médian qui contient les moyens de guidage. Cet agencement de l'insert permet de conférer une simplicité de conception au disque de coupe car l'insert est alors réversible et un simple retournement sur lui-même permet de présenter la face de travail adéquate sans aucun réglage supplémentaire. Les opérations à effectuer par l'utilisateur sont réduites au minimum.

De manière avantageuse, l'insert comporte des organes de préhension agencés sur le bout de l'insert opposé à l'organe d'entraînement. L'ergonomie de l'insert est améliorée par la présence de ces organes de préhension de sorte que l'utilisateur peut manipuler facilement l'insert.

Un autre aspect de l'invention concerne un appareil électroménager de préparation d'aliments comportant au moins un disque de coupe selon le premier aspect de l'invention.

Enfin, un dernier aspect de l'invention est un procédé de mise en configuration d'un appareil électroménager de préparation d'aliments en julienne ou en émincé, comportant notamment les opérations consistant à :
(i) monter sur un disque de coupe selon le premier aspect de l'invention avec la première face de travail de l'insert qui comporte des couteaux pour effectuer, en complément avec la lame de coupe, une préparation en julienne des aliments, l'insert présentant la première face de travail pour préparer les aliments en julienne,
ou (ii) monter sur un disque de coupe selon le premier aspect de l'invention avec la première face de travail de l'insert qui comporte des couteaux pour effectuer, en complément avec la lame de coupe, une préparation en julienne des aliments, l'insert présentant la deuxième face de travail pour préparer les aliments en émincé,
(iii) monter le disque de coupe sur l'appareil électroménager de préparation d'aliments.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 représente un disque de coupe selon l'invention ;
- la figure 2 représente un insert faisant partie du disque de coupe de la figure 1 ;
- la figure 3 représente le disque de coupe de la figure 1 en l'absence de l'insert ;
- la figure 4 représente une possibilité de montage de l'insert sur le disque de coupe de la figure 1.

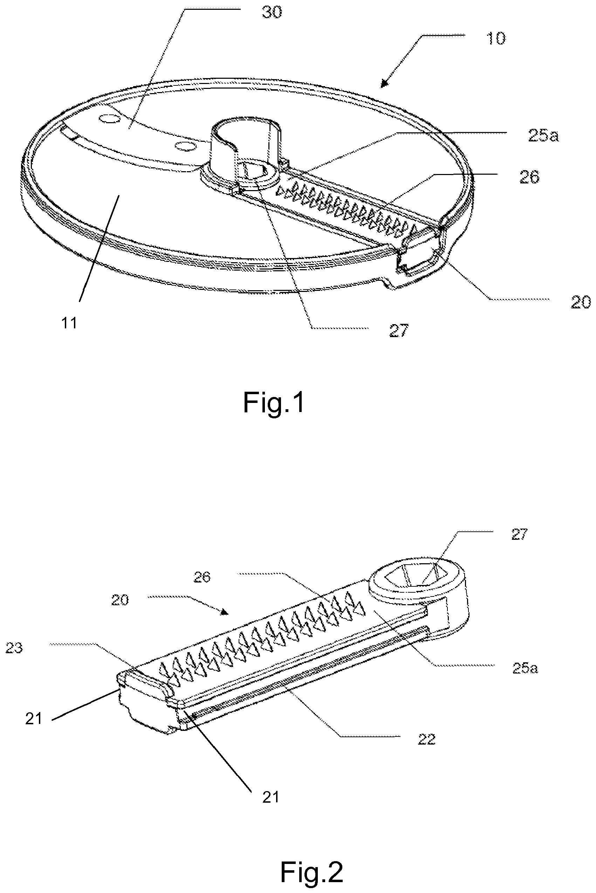

La figure 1 représente un disque de coupe 10 comportant une lame de coupe 30 et un insert 20 amovible. Le disque de coupe 10 forme un plateau 11, ou surface de travail, sur lequel est fixée de manière définitive la lame de coupe 30. Cette lame 30, lors de l'utilisation du disque de coupe 10 dans un appareil électroménager de préparation d'aliments tranche ces derniers en émincé. Par ailleurs, ici à 180° par rapport à la lame 30, l'insert 20 est monté sur le disque de coupe 10 et possède deux faces de travail 25a, et 25b qui sont les surfaces de l'insert amenées à être en contact avec les aliments pendant leur préparation. Cet insert 20, de forme allongée et parallélépipédique, est positionné sur le disque de coupe 10 de manière à ce que la face de travail 25a soit au même niveau que la surface de travail du disque de coupe 10. De plus, l'insert 20 s'étend du centre du disque de coupe 10 à sa périphérie, et il comprend l'organe d'entraînement 27 du disque de coupe 10. Cet organe d'entraînement 27 possède une section non circulaire (ici hexagonale) qui coopère avec l'arbre de rotation de l'appareil relié à un organe moteur de l'appareil électroménager, un moteur électrique par exemple. Ainsi, c'est l'insert 20 qui transmet le couple de rotation du moteur et sans l'insert, le disque de coupe 10 ne tourne pas, ce qui évite toute dégradation du disque ou de la chaîne de transmission du couple moteur. Enfin, la face 25a de l'insert 20 comporte des lames ou couteaux 26 disposés en saillie et orientés tangentiellement au disque. Ainsi, dans cette configuration de montage de l'insert 20, les aliments vont être fendus lors du passage de l'insert 20 et lorsque la lame de coupe 30 tranchera les aliments, l'utilisateur obtiendra des filets, ou autrement dit une préparation en julienne.

La figure 2 représente en détail l'insert 20. Celui-ci comprend donc l'organe d'entraînement 27, une première face de travail 25a, une deuxième face de travail 25b non visible sur cette figure, deux rainures de guidage 21 et des organes de préhension 23 agencés à l'opposé de l'organe d'entraînement 27. La forme plate et allongée de l'insert permet de définir un plan médian entre les deux faces de travail 25a et 25b, et des moyens de guidage 22 radial formés par les rainures de guidage 21 sont contenus dans ce plan. Les moyens de guidage 22 forment ainsi une glissière radiale. La glissière 22 coopère avec le disque de coupe 10 pour permettre le positionnement final de l'insert sur le disque de coupe 10 et son montage - démontage. La glissière 22 est donc contenue dans le plan médian, ce qui permet un retournement de l'insert 20 sur le disque de coupe 10 pour présenter alternativement la face de travail 25a ou la face de travail 25b sur la face de travail du disque de coupe 10. La face de travail 25a comporte des lames ou couteaux verticaux 26 disposés en saillie et orientés tangentiellement au disque et qui ont pour fonction de fendre les aliments à préparer si c'est la face de travail 25a qui est positionnée au niveau de la surface de travail du disque de coupe 10, comme expliqué lors de la description de la figure 1. Enfin, pour faciliter la préhension de l'insert par l'utilisateur, des organes de préhension 23 sont formés par des rebords agencés sur le bout de l'insert 20 opposé à l'organe d'entraînement 27.

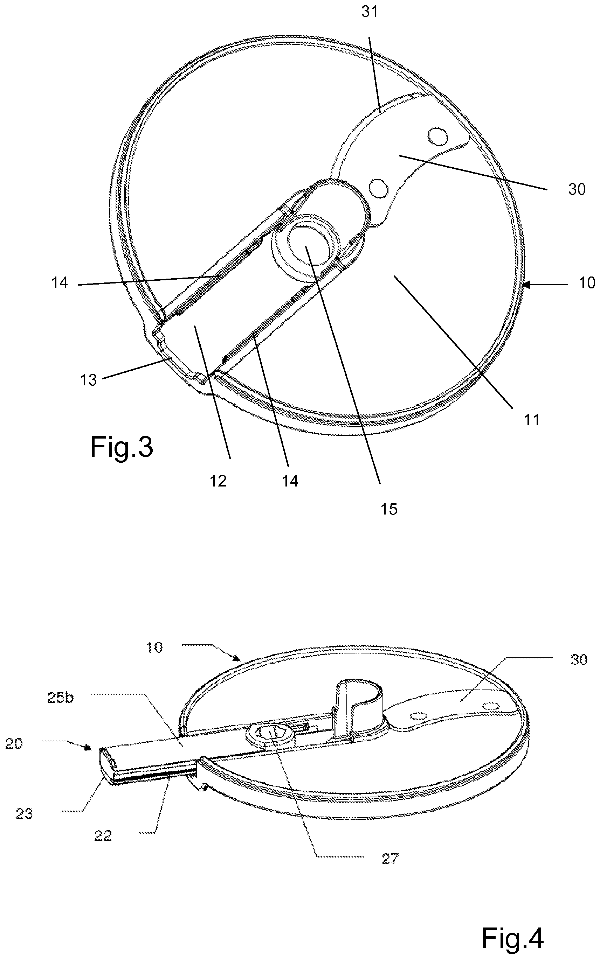

La figure 3 représente le disque de coupe 10 de la figure 1 en l'absence de l'insert 20 pour émincer les aliments. Le plateau 11 du disque de coupe 10 comporte un logement 12 relié à une échancrure périphérique 13 prévue pour le montage de l'insert 20. Des nervures 14 prévues pour coopérer avec les rainures 21 de l'insert 20 sont ménagées sur les parois latérales du logement 12. Les nervures 14 appartiennent aux moyens de guidage 22 de l'insert 20. Tel que représenté sur la figure 3, le logement 12 est traversant, toutefois le logement 12 pourrait comporter si désiré une paroi de fond. Le plateau 11 présente une ouverture traversante 31 adjacente à la lame de coupe 30, prévue pour l'évacuation des aliments découpés. Le disque de coupe 10 comporte un organe de centrage 15 solidaire du plateau 11, prévu pour être traversé par l'arbre de rotation de l'appareil. L'organe de centrage 15 est agencé en regard de l'organe d'entraînement 27 lorsque l'insert 20 est en place dans le disque de coupe 10. Le plateau 11 et l'insert 20 sont ainsi maintenus en place par l'arbre de rotation de l'appareil lors de la rotation du disque de coupe 10.

La figure 4 représente le disque de coupe 10 de la figure 1 lors du montage de l'insert 20 pour émincer les aliments. En effet, la face 25b, qui est positionnée au niveau de la surface de travail du disque, ne fera aucune action sur les aliments, ces derniers étant seulement tranchés par la lame de coupe 30. Par ailleurs, si l'insert 20 est mal positionné sur le disque de coupe 10 ou s'il en est absent, le disque de coupe 10 monté dans l'appareil de préparation des aliments ne sera pas entraîné en rotation car l'organe d'entraînement 27 ne coopèrera pas avec l'arbre de rotation de l'appareil.

A titre de variante, l'insert 20 pourrait comporter un organe de centrage et le disque de coupe 10 pourrait comporter un organe d'entraînement 27 solidaire du plateau 11.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un montage-démontage de l'insert dans une direction radiale du disque, on pourra envisager d'effectuer un montage-démontage dans une direction combinant une composante radiale et une composante tangentielle au disque.

## Revendications

1. Disque de coupe (10) pour appareil électroménager de préparation d'aliments comportant une lame de coupe (30) fixe et un insert (20) démontable comportant des moyens de positionnement sur le disque de coupe (10) permettant un démontage de l'insert (20) depuis une première position, pour permettre un remontage dans une deuxième position, de sorte que l'insert (20) est apte à présenter deux faces de travail (25a, 25b) différentes dans l'une ou l'autre des deux positions, **caractérisé en ce que** le disque de coupe (10) est entraîné en rotation par l'insert (20) qui comporte un organe d'entraînement (27) apte à coopérer avec un arbre de rotation relié à un organe moteur de l'appareil électroménager de préparation d'aliments, et **en ce que** des moyens de guidage (22) radial permettent un démontage de l'insert (20) depuis la première position, pour permettre un remontage dans la deuxième position.

2. Disque de coupe (10) pour appareil électroménager de préparation d'aliments selon la revendication 1, **caractérisé en ce que** la première face de travail (25a) de l'insert (20) effectue une opération de coupe sur les aliments et **en ce que** la deuxième face de travail (25b) est lisse.

3. Disque de coupe (10) pour appareil électroménager de préparation d'aliments selon l'une des revendications 1 ou 2, **caractérisé en ce que** les moyens de guidage (22) forment une glissière radiale.

4. Disque de coupe (10) pour appareil électroménager de préparation d'aliments selon l'une des revendications 1 à 3, la lame de coupe (30) servant à émincer les aliments, **caractérisé en ce que** la première face de travail (25a) de l'insert (20) comporte des couteaux (26) pour effectuer, en complément avec la lame de coupe (30), une préparation en julienne des aliments.

5. Disque de coupe (10) pour appareil électroménager de préparation d'aliments selon l'une des revendications 1 à 4, **caractérisé en ce que** l'insert (20), de forme allongée, possède un plan médian et **en ce que** les deux faces de travail (25a, 25b) sont agencées en opposition l'une de l'autre par rapport au plan médian qui contient les moyens de guidage (22).

6. Disque de coupe (10) pour appareil électroménager de préparation d'aliments selon l'une des revendications 1 à 5, **caractérisé en ce que** l'insert (20) comporte des organes de préhension (23) agencés sur le bout de l'insert (20) opposé à l'organe d'entraînement (27).

7. Disque de coupe (10) pour appareil électroménager de préparation d'aliments selon l'une des revendications 1 à 6, **caractérisé en ce qu'**il forme un plateau (11).

8. Disque de coupe (10) pour appareil électroménager de préparation d'aliments selon la revendication 7, **caractérisé en ce que** la lame de coupe (30) est fixée de manière définitive sur le plateau (11).

9. Disque de coupe (10) pour appareil électroménager de préparation d'aliments selon l'une des revendications 7 ou 8, **caractérisé en ce que** le plateau (11) comporte un logement (12) relié à une échancrure périphérique (13) prévue pour le montage de l'insert (20).

10. Appareil électroménager de préparation d'aliments comportant au moins un disque de coupe (10) selon l'une des revendications 1 à 9.

11. Procédé de mise en configuration d'un appareil électroménager de préparation d'aliments en julienne ou en émincé, comportant notamment les opérations consistant à :
(i) monter sur un disque de coupe (10) selon la revendication 4, l'insert (20) présentant la première face de travail (25a) pour préparer les aliments en julienne, ou
(ii) monter sur un disque de coupe selon la revendication 4, l'insert (20) présentant la deuxième face de travail (25b) pour préparer les aliments en émincé,
(iii) monter le disque de coupe (10) sur l'appareil électroménager de préparation d'aliments.

## Patentansprüche

1. Schneidscheibe (10) für ein elektrisches Haushaltsgerät zur Zubereitung von Nahrungsmitteln, aufweisend eine feststehende Schneidklinge (30) und einen demontierbaren Einsatz (20), der Positioniermittel an der Schneidscheibe (10) aufweist, die eine Demontage des Einsatzes (20) von einer ersten Position aus ermöglichen, um eine Remontage in einer zweiten Position zu ermöglichen, so dass der Einsatz (20) geeignet ist, zwei unterschiedliche Arbeitsflächen (25a, 25b) in der einen oder der anderen der zwei Positionen vorzuweisen, **dadurch gekennzeichnet, dass** die Schneidscheibe (10) durch den Einsatz (20) gedreht wird, der ein Antriebselement (27) vorweist, das geeignet ist, mit einer Rotationswelle zusammenzuarbeiten, die mit einem Motorelement des elektrischen Haushaltsgeräts zur Zubereitung von Nahrungsmitteln verbunden ist, und dass Mittel zur radialen Führung (22) die Demontage des Einsatzes (20) von einer ersten Position aus ermöglichen, um die Remontage in der zweiten Position zu ermöglichen.

2. Schneidscheibe (10) für ein elektrisches Haushaltsgerät zur Zubereitung von Nahrungsmitteln nach Anspruch 1, **dadurch gekennzeichnet, dass** die erste Arbeitsfläche (25a) des Einsatzes (20) einen Schneidvorgang an den Nahrungsmitteln bewirkt, und dass die zweite Arbeitsfläche (25b) glatt ist.

3. Schneidscheibe (10) für ein elektrisches Haushaltsgerät zur Zubereitung von Nahrungsmitteln nach einem der Ansprüche 1 oder 2, **dadurch gekennzeichnet, dass** die Mittel zur Führung (22) einen radiale Gleitfläche bilden.

4. Schneidscheibe (10) für ein elektrisches Haushaltsgerät zur Zubereitung von Nahrungsmitteln nach einem der Ansprüche 1 bis 3, wobei die Schneidklinge (30) zum Schneiden von Nahrungsmitteln in dünne Scheiben dient, **dadurch gekennzeichnet, dass** die erste Arbeitsfläche (25a) des Einsatzes (20) Messer (26) aufweist, um zusätzlich zu der Schneidklinge (30) eine Zubereitung der Nahrungsmittel in dünnen Scheiben zu bewirken.

5. Schneidscheibe (10) für ein elektrisches Haushaltsgerät zur Zubereitung von Nahrungsmitteln nach einem der Ansprüche 1 bis 4, **dadurch gekennzeichnet, dass** der Einsatz (20) von länglicher Form eine Mittelebene besitzt, und dass beide Arbeitsflächen (25a, 25b) in Bezug auf die Mittelebene, die die Mittel zur Führung (22) enthält, gegeneinander angeordnet sind.

6. Schneidscheibe (10) für ein elektrisches Haushaltsgerät zur Zubereitung von Nahrungsmitteln nach einem der Ansprüche 1 bis 5, **dadurch gekennzeichnet, dass** der Einsatz (20) Greifelemente (23) aufweist, die an dem Ende des Einsatzes (20) gegenüber dem Antriebselement (27) angeordnet sind.

7. Schneidscheibe (10) für ein elektrisches Haushaltsgerät zur Zubereitung von Nahrungsmitteln nach einem der Ansprüche 1 bis 6, **dadurch gekennzeichnet, dass** sie eine Platte (11) bildet.

8. Schneidscheibe (10) für ein elektrisches Haushaltsgerät zur Zubereitung von Nahrungsmitteln nach Anspruch 7, **dadurch gekennzeichnet, dass** die Schneidklinge (30) fest an der Platte (11) befestigt ist.

9. Schneidscheibe (10) für ein elektrisches Haushaltsgerät zur Zubereitung von Nahrungsmitteln nach einem der Ansprüche 7 oder 8, **dadurch gekennzeichnet, dass** die Platte (11) eine Aufnahme (12) aufweist, die mit einem umlaufenden Schlitz (13) verbunden ist, der für die Montage des Einsatzes (20) vorgesehen ist.

10. Elektrisches Haushaltsgerät zur Zubereitung von Nahrungsmitteln, aufweisend mindestens eine Schneidscheibe (10) nach einem der Ansprüche 1 bis 9.

11. Verfahren zum Konfigurieren eines elektrischen Haushaltsgeräts zur Zubereitung von Nahrungsmitteln in feinen Streifen oder in dünnen Scheiben, aufweisend insbesondere die Vorgänge, die bestehen aus:
(i) Montieren des Einsatzes (20) auf einer Schneidscheibe (10) nach Anspruch 4, der die erste Arbeitsfläche (25a) zum Zubereiten von Nahrungsmitteln in feinen Streifen vorweist, oder
(ii) Montieren des Einsatzes (20) auf einer Schneidscheibe nach Anspruch 4, der die zweite Arbeitsfläche (25b) zum Zubereiten der Nahrungsmittel in dünnen Scheiben vorweist,
(iii) Montieren der Schneidscheibe (10) an dem elektrischen Haushaltsgerät für die Zubereitung von Nahrungsmitteln.

## Claims

1. Cutting disc (10) for household electrical appliance for preparing food comprising a fixed cutting blade (30) and a dismountable insert (20) comprising positioning means on the cutting disc (10) making it possible to dismount the insert (20) from a first position, to make it possible to remount in a second position, such that the insert (20) is capable of having two different working faces (25a, 25b) in one or the other of the two position, **characterised in that** the cutting disc (10) is rotated by the insert (20) which comprises a driving member (27) capable of engaging with a rotating shaft connected to a motor member of the household appliance for preparing food, and **in that** the radial guide means (22) make it possible to dismount the insert (20) from the first position, to make it possible to remount in the second position.

2. Cutting disc (10) for household electrical appliance for preparing food according to claim 1, **characterised in that** the first working face (25a) of the insert (20) carries out a cutting operation on the food and **in that** the second working face (25b) is smooth.

3. Cutting disc (10) for household electrical appliance for preparing food according to one of claims 1 or 2, **characterised in that** the guide means (22) form a radial slide.

4. Cutting disc (10) for household electrical appliance for preparing food according to one of claims 1 to 3, the cutting blade (30) being used to slice the food, **characterised in that** the first working face (25a) of the insert (20) comprises knives (26) to carry out, complementarily with the cutting blade (30), a diced preparation of the food.

5. Cutting disc (10) for household electrical appliance for preparing food according to one of claims 1 to 4, **characterised in that** the insert (20), of elongate shape, has a median plane and **in that** the two working faces (25a, 25b) are arranged opposite one another with respect to the median plane which contains the guide means (22).

6. Cutting disc (10) for household electrical appliance for preparing food according to one of claims 1 to 5, **characterised in that** the insert (20) comprises gripping members (23) arranged on the end of the insert (20) opposite the drive member (27).

7. Cutting disc (10) for household electrical appliance for preparing food according to one of claims 1 to 6, **characterised in that** it forms a plate (11).

8. Cutting disc (10) for household electrical appliance for preparing food according to claim 7, **characterised in that** the cutting blade (30) is fixed definitively on the plate (11).

9. Cutting disc (10) for household electrical appliance for preparing food according to one of claims 7 or 8, **characterised in that** the plate (11) comprises a housing (12) connected to a peripheral indentation (13) provided for the mounting of the insert (20).

10. Household electrical appliance for preparing food comprising at least one cutting disc (10) according to one of claims 1 to 9.

11. Method for configuring a household electrical appliance for preparing food diced or sliced, comprising in particular operations consisting of:
(i) mounting on a cutting disc (10) according to claim 4, the insert (20) having the first working face (25a) for preparing food diced, or
(ii) mounting on a cutting disc according to claim 4, the insert (20) having the second working face (25b) for preparing food sliced,
(iii) mounting the cutting disc (10) on the household electrical appliance for preparing food.
